# DEMANDE DE BREVET EUROPEEN

(11) **EP 1 588 840 A1**
(43) Date de publication de la demande: **26.10.2005**
(21) Numéro de dépôt: 05290881.1
(22) Date de dépôt: 20.04.2005
(51) Int. Cl.: B32B 21/08, B27D 1/00

(54) **Procédé d'application et d'impregnation d'un tissu sur une surface d'ameublement**

(30) Priorité: 20.04.2004 FR 0404169
(71) Demandeur: MOSCOVICI, Jean-Claude, 75116 Paris (FR)
(72) Inventeur: Bernard, Frédéric, 30250 Sommieres (FR)
(74) Mandataire: Berger, Helmut

(57) **Abrégé**

L'invention concerne un procédé d'application à au moins une partie de la surface d'un objet, tel qu'un panneau ou d'un meuble, d'un élément de revêtement, par l'intermédiaire d'un moyen de fixation de cet élément sur la surface de support.

Le procédé est caractérisé en ce que l'on utilise comme moyen de fixation une résine polymérique durcissable transparente ayant une viscosité prédéterminée et comme élément de revêtement des éléments qui sont perméables à la résine de façon qu'à l'état appliqué à la surface de support, l'élément soit imprégné de ladite résine et cette dernière soit en contact avec la surface de support.

L'invention est utilisable pour décorer des meubles.

## Description

L'invention concerne un procédé d'application à au moins une partie de la surface d'un objet, d'un élément, de revêtement notamment de protection ou porteur d'un motif décoratif par l'intermédiaire d'un moyen de fixation sur la surface de support et un objet pourvu d'un tel revêtement.

Les procédés de ce type, qui sont connus, utilisent en général, à titre d'élément à appliquer, des feuilles de stratifié peu épaisses qui sont fixées sur la surface de support par collage. Ces procédés ont des inconvénients majeurs dont celui d'un fort risque de décollage de la feuille, qui augmente avec la complexité de la forme du support.

La présente invention a pour but de proposer un procédé qui pallie les inconvénients des procédés connus.

Pour atteindre ce but, le procédé selon l'invention est caractérisé en ce que l'on utilise comme moyen de fixation une résine polymérique durcissable ayant une viscosité prédéterminée et comme élément de revêtement des éléments qui sont perméables à la résine de façon qu'à l'état appliqué à la surface de support, l'élément soit imprégné de ladite résine et cette dernière soit en contact avec la surface de support.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- les figures 1 et 2 sont des vues en perspective illustrant une table et une commode pourvus de décorations réalisées selon l'invention ;
- la figure 3 est une vue schématique, en perspective et avec arrachement, pour illustrer le procédé selon l'invention ;
- la figure 4 est une vue en coupe selon la ligne IV-IV de la figure 3 ; et
- la figure 5 est une vue similaire à la figure 4 d'une autre version de réalisation.

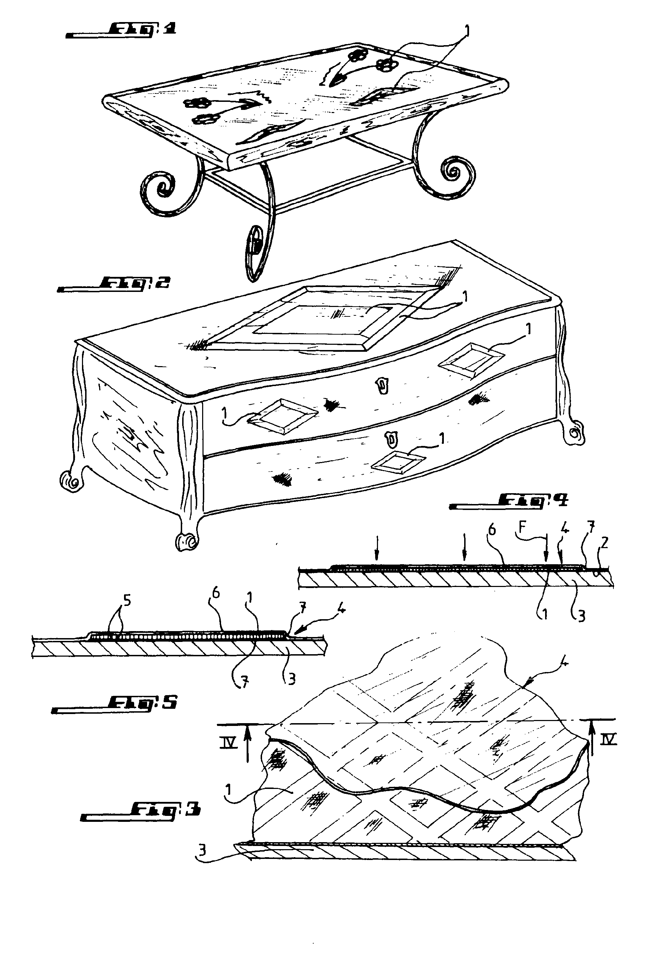

Les figures 1 et 2 montrent, à titre d'exemple, deux objets, une table et une commode, dont certaines parties de la surface extérieure sont pourvues d'un revêtement 1 qui a été appliqué selon le procédé proposé par l'invention. Dans le cas de la figure 1, c'est la face supérieure de la table qui est recouverte d'un revêtement pourvu de motifs décoratifs. La figure 2 montre que le revêtement peut être appliqué à des surfaces horizontales, verticales, planes ou bombées.

Conformément à l'invention, on utilise comme moyen de fixation des éléments de revêtement sur leur surface de support une résine polymérique durcissable, telle que du polyuréthane et les éléments utilisées sont en un matériau qui est perméable à cette résine de façon que cette dernière soit en mesure de passer à travers l'élément, pour que lors de l'application de celui-ci, il se trouve imprégné de la résine et cette dernière soit en contact avec la surface de support.

On décrira ci-après, plus en détail, deux modes de réalisation du procédé selon l'invention. Dans chaque cas il s'agit d'appliquer un élément de revêtement 1 de protection ou porteur d'un motif décoratif sur une surface 2 d'un objet 3, dans le cas décrit à titre d'exemple un panneau et un meuble. Dans le cadre de l'invention, l'élément de revêtement 1 pourrait être de toute nature appropriée, à condition qu'il soit perméable à la résine. Cet élément pourrait être avantageusement un tissu ou étoffe par exemple d'ameublements, ou de décoration comportant des fils de trame et de chaînes qui se croisent.

Conformément au premier mode de réalisation de l'invention, on pose tout d'abord l'élément de revêtement 1, dans la présente description donnée, à titre d'exemple, une portion d'un tissu, sur la surface 2, à l'état bien étendu, le cas échéant assuré par des moyens de fixation préalables appropriés. Puis on verse sur le tissu 1 une quantité prédéterminée d'une résine polymérique durcissable désignée par la référence 4, comme cela est illustré par les flèches F. Cette résine présente une viscosité lui permettant de passer à travers des interstices indiqués symboliquement en 5 du tissu pour pouvoir venir en contact avec la surface 2, imprégner le tissu et former sur celui-ci, avantageusement une couche de résine d'une épaisseur prédéterminée 6. Comme l'illustre la figure, en s'écoulant aussi sur les zones de la surface 2 tout autour du tissu 1 la résine recouvre non seulement la surface supérieure de celui-ci, mais également les bords 7 de façon que le tissu soit complètement intégré à la couche de résine qui, après son durcissement, est devenue inséparable de la face de support non seulement sous le tissu 1, mais également autour de celui-ci.

Après le durcissement de la résine, on peut travailler la surface de celle-ci, c'est-à-dire effectuer un surfaçage, par exemple la polir pour obtenir une surface extérieure parfaitement plane, lisse et régulière. Il est également possible d'appliquer successivement d'autres couches de résine non représentée spécifiquement. Il est avantageux que la résine soit appliquée sous forme de couches relativement minces pour éviter des défauts dans l'épaisseur totale de la structure stratifiée ainsi crée, par exemple des fissurations, lors du durcissement, ou d'autres phénomènes préjudiciables, telle que l'inclusion de bulles d'air. On fait aussi procéder à un ébullage. Les opérations de traitement et d'autres seront décrites plus en détail lors de la description du second mode de réalisation.

Comme on le voit sur la figure 3, si le tissu a été choisi pour son motif décoratif, la couche 6 qui recouvre ce tissu et qui est transparent, laisse nettement apparaître ce motif tout en permettant d'obtenir une surface extérieure parfaitement plane et lisse. Bien entendu, il suffit de traiter de façon appropriée la couche 6 de résine pour produire d'autres effets de surface.

L'invention prévoit également une possibilité d'utiliser ce procédé dans le cas de surfaces d'application qui présentent des défauts ou d'autres particularités dont on souhaite qu'elles ne soient pas visibles, par exemple lorsque le support est en bois, les veines du bois. En effet, du fait que la résine donne toujours un effet de "mouillé" au tissu, ces défauts ou particularités de la surface deviennent visibles par transparence. Pour éviter cet inconvénient, l'invention propose d'appliquer une fine couche de peinture microporeuse indiqué en 7 sur la figure 4, recouvrant, sur la face de support avant la pose du tissu et l'application de la résine. Grâce aux micropores de la couche de peinture, la résine est en mesure de traverser cette couche pour venir en contact avec la surface de support, à condition bien entendu que la viscosité de la résine soit choisie en conséquence.

Selon un autre mode de réalisation de l'invention, particulièrement adapté à l'application des éléments de protection ou décoratif à des surfaces inclinées ou même verticales, comme dans le cas d'un meuble selon la figure 2, on dépose sur la surface de support, le cas échéant après l'application d'une couche de peinture de recouvrement microporeuse et perméable à la résine, une première couche de résine transparente chargée ou non, selon l'état de la surface, par exemple par projection ou selon toute autre méthode appropriée. Immédiatement après on pose le tissu à plat sur la couche de résine, en le maintenant bien en place, par tout moyen approprié. Puis on procède à un ébullage ou marouflage pour assurer que le tissu s'imprègne de la résine et pour chasser les bulles d'air. Après la réalisation de cette première strate, on pourrait assurer le maintien de celle-ci par une presse et/ou compléter l'ébullage à l'aide d'une pompe à vide jusqu'à la polymérisation totale de cette strate, avec, le cas échéant, recouvrement de celle-ci par un film microporeux, qu'on enlève ensuite, tel qu'un film en un matériau conforme à la marque déposée "MYLAR". Pour l'ébullage à l'aide de la pompe à vide, on met avantageusement en place sur la première strate une poche hermétiquement fermée, mais qui est raccordée à la pompe.

Comme dans le cas du premier mode de réalisation, on peut ensuite procéder à un traitement de surface, tel qu'un ponçage "d'accroche" pour supprimer des fibres rebelles ou des irrégularités du tissu et pour ouvrir les bulles d'air qui seraient remontées en surface. Puis on peut déposer une deuxième couche de résine et, lorsque celle-ci devient "filante" au doigt, on dépose le cas échéant une troisième et dernière couche. A nouveau, comme décrit précédemment, après une polymérisation totale du composite ainsi formé et éventuellement une cuisson de 24 heures à par exemple 40°C, on effectue un traitement de surface finale, sous forme d'un ponçage, polissage, vernissage ou analogue. Après ce surfaçage, l'objet auquel le tissu ou, de façon générale, l'élément de revêtement a été appliqué est fini et est prêt à être utilisé.

On comprend aisément que la couche stratifiée appliquée est réalisable sur des objets de tout genre, par exemple, des parties de meubles anciens ou neufs qu'on voudra décorer ou protéger. La surface d'application pourrait être de toute nature, par exemple en bois, métal, matière synthétique ou analogue. De façon générale, l'invention permet l'application d'éléments de protection ou décoratif, qui sont perméables à la résine, sur des objets de toute nature et matière qui permettent la polymérisation de la résine sur sa surface extérieure de façon que le support fasse parti de la structure composite formée.

Comme il a été décrit ci-avant, l'invention est particulièrement adaptée à l'utilisation de tissu décoratif d'ameublement ou de confection, quelque soit leur nature ou leur mode de fabrication. En plus de l'aspect purement esthétique, la résine laisse transparaître la trame des étoffes. La structure stratifiée peut être réalisée sur un support qui n'est pas lisse et comporte par exemple des crevasses ou rayures, grâce à l'adjonction de charges transparentes dans la résine.

## Revendications

1. Procédé d'application à au moins une partie de la surface d'un objet, tel qu'un panneau ou d'un meuble, d'un élément de revêtement, par l'intermédiaire d'un moyen de fixation de cet élément sur la surface de support, **caractérisé en ce que** l'on utilise comme moyen de fixation une résine polymérique durcissable transparente ayant une viscosité prédéterminée et comme élément de revêtement des éléments qui sont perméables à la résine de façon qu'à l'état appliqué à la surface de support, l'élément soit imprégné de ladite résine et cette dernière soit en contact avec la surface de support.

2. Procédé selon la revendication 1, **caractérisé en ce que** l'élément de revêtement est un tissu, tel qu'un tissu de décoration ou de confection ou d'ameublement.

3. Procédé selon l'une des revendications 1 ou 2, **caractérisé en ce que** l'on pose l'élément de revêtement (1) sur la surface de support (2) et verse la résine (4) sur l'élément ainsi posé de façon qu'avantageusement la résine, après l'imprégnation de l'élément de revêtement forme au dessus de celle-ci un film de résine (6) d'une faible épaisseur prédéterminée.

4. Procédé selon l'une des revendications 1 ou 2, **caractérisé en ce que** l'on applique tout d'abord sur la surface de support (2) une couche de résine polymérique durcissable (4) et applique ensuite l'élément de revêtement (1) de façon que ce dernier soit imprégné de la résine.

5. Procédé selon l'une des revendications précédentes, **caractérisé en ce que** l'on applique à la première couche à laquelle est incorporé l'élément de revêtement, au moins une seconde couche de résine.

6. Procédé selon l'une des revendications précédentes, **caractérisé en ce que** l'on effectue un surfaçage d'une couche de résine.

7. Procédé selon l'une des revendications précédentes, **caractérisé en ce que** l'on effectue un ébullage des couches de résine.

8. Procédé selon l'une des revendications précédentes, **caractérisé en ce que** l'on applique sur la surface de support (2) tout d'abord une couche d'une peinture microporeuse (7), perméable à la résine, notamment pour cacher cette surface de support.

9. L'objet tel qu'un meuble ou panneau de revêtement réalisé en utilisant le procédé selon l'une des revendications 1 à 8, **caractérisé en ce que** l'élément de revêtement (1) est incorporé à une couche d'une résine polymérique durcie (4) sur une portion de la surface (2) de l'objet (3), l'élément de revêtement (1) étant imprégné de ladite résine.

10. Objet selon la revendication 9, **caractérisé en ce qu'**une couche d'une peinture microporeuse (7), et imprégné de la résine (4) est prévue entre la surface de support (2) et l'élément de revêtement (1).

11. Objet selon l'une des revendications 9 ou 10, **caractérisé en ce que** l'élément de revêtement (1) est un tissu ou une étoffe perméable à la résine polymérique dont il est imprégné.

12. Objet selon l'une des revendications 9 à 11, **caractérisé en ce que** l'élément de revêtement est un élément de décoration.
